**Europäisches Patentamt**

**European Patent Office**

**Office européen des brevets**

(19)

(11) Numéro de publication : **0 470 896 A2**

# DEMANDE DE BREVET EUROPEEN

(12)

(21) Numéro de dépôt : **91402168.8**

(22) Date de dépôt : **02.08.91**

(51) Int. Cl.⁵ : **B29C 53/60,** B29C 53/82,
// B29K105:08, B29L23:00

(30) Priorité : **08.08.90 FR 9010108**
**05.12.90 FR 9015225**
**05.12.90 FR 9015226**
**21.01.91 FR 9100609**

(43) Date de publication de la demande :
**12.02.92 Bulletin 92/07**

(84) Etats contractants désignés :
**DE ES FR GB IT**

(71) Demandeur : **Viellard, Paul Henri**
**11, rue de Sontay**
**F-75116 Paris (FR)**

(72) Inventeur : **Viellard, Paul Henri**
**11, rue de Sontay**
**F-75116 Paris (FR)**

(74) Mandataire : **Hud, Robert**
**Cabinet COLLIGNON 6, rue de Madrid**
**F-75008 Paris (FR)**

(54) **Procédé pour la réalisation, en vue d'une opération de moulage, d'un élément souple tubulaire imprégné de résine.**

(57)    Selon le procédé on habille un mandrin creux 16 d'un boyau 17 en une matière souple et résistante, par exemple en cellophane, et on enroule autour du mandrin 16 ainsi habillé deux mèches de fibres juxtaposées 18,19 imprégnées de résine. Les mèches 18,19 sont enroulées sur une partie centrale du complexe et avec des angles de dépose différents. Venant se superposer à l'enroulement des mèches 18,19, une mèche 20 de fibres imprégnées de résine est enroulée tout le long de la gaine. L'enveloppe composite ainsi formée est séparée du mandrin 16 par introduction d'air sous pression.

fig 6

La présente invention concerne un procédé pour fabriquer des éléments tubulaires rectilignes ou de préférence coudés ou circulaires dont les caractéristiques mécaniques varient en tous points tels une raquette de tennis, une jante de roue de bicyclette, un tube de cadre ou de fourche de bicyclette, un manche de club de golf, une canne à pêche ou une armature de siège d'avion. Elle concerne aussi un procédé pour fabriquer des nappes tissées dont l'anisotropie pourra être contrôlée, à partir d'enveloppes composites complexes composées de fibres de verre, de carbone, d'aramide ou autre préalablement imprégnées de résines thermodurcissables colorées ou neutres d'aspect, puis enroulées autour d'une enveloppe gonflable avant d'être introduites dans un moule. Elle a pour objet de proposer un procédé particulièrement rapide donc économique, car il peut être mis en oeuvre d'une façon répétitive à partir d'une machine d'enroulement filamentaire à commande numérique.

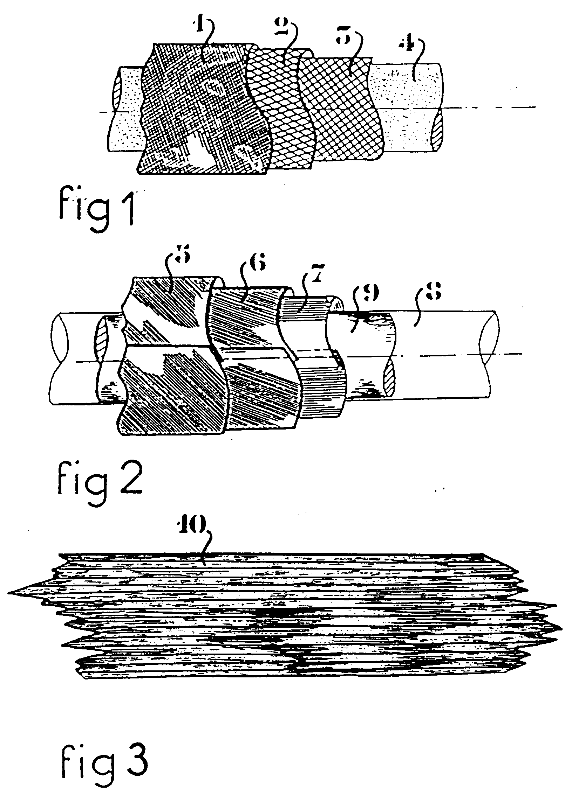

Les figures 1 et 2 illustrent les méthodes conventionnelles pour fabriquer les enveloppes de fibres composites destinées à réaliser des éléments tubulaires par moulage. Ainsi, la figure 1 présente le procédé conventionnel de préparation par tressage de plusieurs couches superposées 1,2,3 de fibres sèches de verre, de carbone, ou autre autour d'un noyau 4 élastique et compressible fait d'une mousse élastomère. Cette technique a pour avantage de permettre d'une part la préparation en continu sur des machines textiles de tressage de l'enveloppe et d'autre part une introduction facile dans les matrices des moules. Par contre, il faut injecter de la résine dans les dits moules ce qui est une opération délicate qui nécessite des moules onéreux. Par ailleurs les fils de fibres sèches, lors du tressage, sont torsadés de sorte que, lorsqu'ils seront plaqués contre le moule lors de la polymérisation de la résine, ils auront tendance à laisser de petits vides conférant au produit moulé final un mauvais aspect de surface.

On sait aussi que les machines de tressage en continu ne permettent pas de faire varier les angles de tressage d'une même couche à volonté. Cet inconvénient est particulièrement lourd lorsqu'il s'agit par exemple de fabriquer l'enveloppe destinée à constituer le cadre d'une raquette de tennis. On sait en effet, que tous les points d'un bon cadre ne sont pas sollicités de la même façon : certains le sont plus en flexion qu'en torsion ou inversement. Ce procédé ne permet pas non plus de faire varier le nombre de couches de fibres selon les endroits de l'enveloppe. Autre inconvénient, le noyau compressible en mousse autour duquel les tresses sont formées ne permet pas d'obtenir des pressions élevées pour plaquer les fibres sur les parois du moule, ce qui limite la qualité du matériau composite finalement obtenu après polymérisation. Enfin il est clair qu'on ne peut teinter autrement que par une couleur uniforme pigmentant la résine, l'ensemble du complexe tressé. La figure 2 présente le second procédé conventionnel de préparation, par roulage autour d'un tube gonflable 8, par exemple en cellophane, préalablement introduit autour d'un mandrin rigide 9 servant à faciliter le roulage, de nappes et de tissus de fibres préalablement imprégnés de résine thermodurcissable. Les nappes 5,6,7 préalablement découpées sont disposées à plat selon diverses orientations puis roulées les unes après les autres, de telle façon qu'elles soient superposées autour de l'enveloppe de cellophane 8.

Le mandrin rigide étant enlevé, l'enveloppe composite est introduite dans les cavités d'un moule. On injecte alors sous forte pression, par exemple de l'air sous 15kg/cm², qui fera plaquer l'enveloppe sur les parois du moule alors chauffé pour faire polymériser la résine. On peut également, tel que décrit dans le brevet des Etats-Unis d'Amérique N° 4 070 020, introduire un mélange moussant lors de la polymérisation.

Ce second procédé présente également des inconvénients. En effet, il est difficile de prédécouper exactement la bande de tissu ou de nappe à enrouler pour que les bords latéraux de celle-ci soient à l'aplomb rigoureux l'un de l'autre. En réalité, on fait généralement en sorte que le bord extérieur chevauche légèrement le bord intérieur. Il en résulte que les propriétés mécaniques de l'élément obtenu ne sont pas isotropes autour de l'axe de celui-ci. Le long de la génaratrice sur laquelle se chevauchent lesdits bords latéraux de la bande de tissu ou de nappe, l'élément tubulaire présente une plus grande rigidité. Par ailleurs les couches de tissu superposées, lorsque la résine qui les imprègne est polymérisée, ont tendance à se délaminer sous les efforts et les flexions répétés. On sait aussi, que lors de l'introduction de l'enveloppe dans la cavité du moule, les couches superposées de nappes et de tissus ont une tendance naturelle à se dérouler, ce qui ne permet pas d'obtenir des produits de qualité absolument constante.

Egalement lors de cette introduction dans le moule, des plis se forment à l'intérieur du rayon de courbure alors que les nappes sont tendues à l'extérieur. Il en résulte une moindre résistance de l'enveloppe polymérisée finale. Egalement, il est clair qu'il est impossible de faire varier en tous points de l'enveloppe les angles des fibres composant les couches de nappes déposées. Enfin, il apparait difficile de donner à l'enveloppe obtenue un aspect polychromique puisque les nappes utilisées sont faites de fibres uniformément noires s'il s'agit de carbone ou monochrome s'il s'agit d'une autre fibre.

La figure 3 présente une portion de nappe de mèches de fils de carbone 10, obtenue selon un procédé connu. Ces mèches imprégnées de résine sont disposées les unes à côté des autres pour former une nappe qui sera découpée et croisée manuellement par superposition pour former un ensemble composite multicouche qui poura éventuellement être roulé autour d'une enveloppe pour former l'ensemble selon la figure 2. Cette stratification de nappes est obtenue de façon manuelle donc onéreuse et les angles des couches superposées sont constants à telle enseigne que l'anisotropie de l'ensemble est constante en tous points. Enfin, il est clair que cet ensemble composite est monochrome. Il faut aussi signaler que l'expérience montre que la résistance au délaminage des couches superposées laisse à désirer.

La présente invention a pour objet de rémédier aux inconvénients des méthodes connues rappelées ci-dessus.

Conformément à l'invention, on propose un procédé qui consiste à enrouler, par couches superposées dont le nombre peut varier, des mèches de fibres résistantes de verre, de carbone, d'aramide ou autres, imprégnées de résines synthétiques durcissables autour d'une enveloppe souple, elle-même habillant un mandrin rigide qui peut être conique, cylindrique ou de toute autre forme destiné à être enlevé après l'opération d'enroulement filamentaire menée sur une machine automatique. Si on le désire, les résines synthétiques utilisées peuvent être teintées de couleurs différentes.

Selon la présente invention, on peut réaliser l'enveloppe souple gonflable soit à partir d'une gaine cylindrique qui peut être thermorétractable, soit à partir d'une bande enroulée hélicoïdalement autour du mandrin de telle façon que les spires se recouvrent sur une partie de leur largeur et viennent ainsi former une gaine étanche gonflable, les zones de recouvrement étant solidarisées entre elles.

Ce procédé permet de déposer selon des angles variables des mèches de fibres préimprégnées de résines teintées de diverses couleurs. Le complexe formé de fibres entrelacées et imprégnées de résines polychromes étant séparé de son mandrin rigide, peut être soit tranché pour obtenir une nappe mise à plat, soit introduit dans la cavité d'un moule.

Dans ce dernier cas de l'air ou un gaz neutre, sous forte pression, est alors introduit dans le boyau gonflable en venant plaquer les mèches de fibres sur les parois du moule, alors chauffé pour faire polymériser la résine de préimprégnation.

On remarquera que le procédé selon l'invention permet de faire varier à volonté, d'une façon répétitive et peu onéreuse, les qualités de flexion et/ou de résistance à l'écrasement de l'élément tubulaire ou de la nappe roulée.

En effet, il est ici possible d'agir sur le pas des enroulements, sur leur nombre, leur longueur, leur superposition, sur la nature des mèches et sur la forme des mandrins. Une bande de mèches formant un ruban de fibres unidirectionnellement orientées peut être placée selon une génératrice de l'enveloppe, lui conférant en cette ligne une plus grande rigidité après gélification de la résine.

Cette façon de procéder par moulage d'un élément souple tubulaire de fibres bobinées autour d'une enveloppe souple est connue. Ainsi, le brevet des Etats-Unis n° 3 902 944 et le brevet du Japon n° 61-220 828 présentent des procédés pouvant s'y apparenter puisqu'ils permettent de réaliser des structures fibreuses enrobées de résine et creuses. On ne retrouve pas toutefois dans ces documents les possibilités essentielles de réaliser un élément tubulaire polychrome ou une nappe polychrome dont les anisotropies peuvent être contrôlées.

On n'y retrouve pas, en effet, ces caractéristiques concernant l'enroulement selon un pas variable sur une longueur différente de plusieurs couches de mèches de fibres, la forme des mandrins, la nature des enveloppes souples faites de bandelettes ou de matière thermorétractable, la possiblité d'intercaler en cours d'enroulement des bandes de mèches unidirectionnelles, de former des damiers polychromes en teignant les résines préalablement à l'enroulement. Les objectifs et avantages précités de l'invention ainsi que d'autres apparaîtront clairement d'après la description suivante donnée à titre d'exemple indicatif mais nullement limitatif en référence aux dessins annexés, dans lesquels :

les figures 4 à 8 montrent en vue schématique diverses réalisations du procédé de préparation de l'enveloppe conforme à l'invention, et

les figures 9 et 10 montrent en vue schématique des réalisations de nappes tissées selon l'invention.

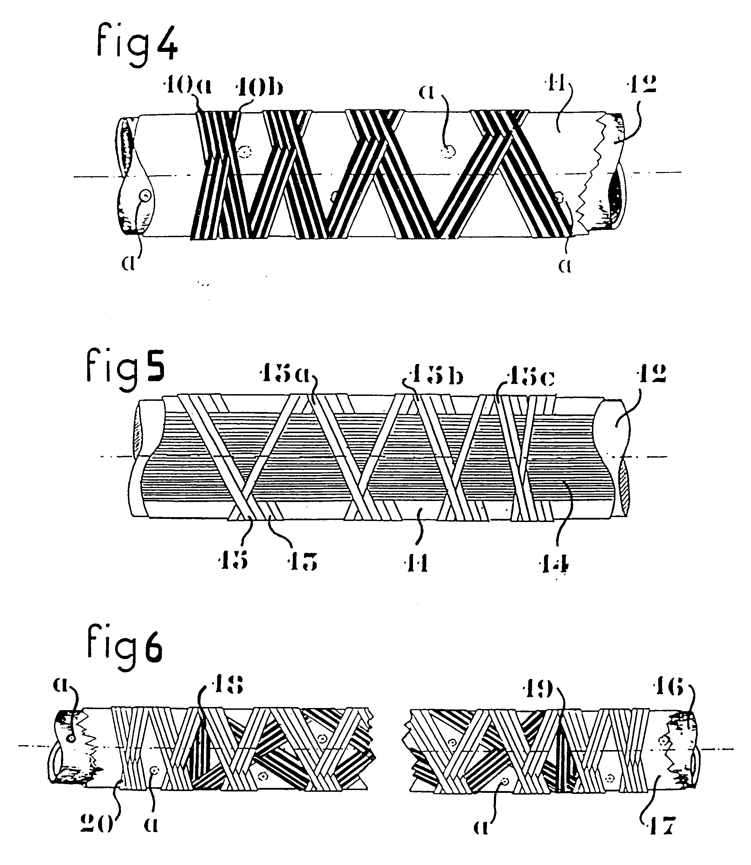

En référence à la figure 4 on enroule, juxtaposées l'une à l'autre, deux mèches de couleur différente, l'une 10a en fibres de carbone noires imprégnées de résine, l'autre 10b en fibres de verre dont la résine d'imprégnation a été teinté en rouge en conférant à la mèche cette couleur. Ce premier enroulement est réalisé autour d'un boyau 11 en cellophane, étanche, gonflable, lui-même préalablement introduit sur un mandrin d'entrainement 12 creux, destiné à être enlevé lorsque plusieurs couches des mèches 10a et 10b auront été bobinées et superposées.

Pour faciliter l'opération de déshabillage du mandrin creux 12 celui-ci est perforé de trous destinés à laisser passer de l'air sous pression venant décoller l'enveloppe gonflable 11 plaquée par la pression des fils enroulés 10a et 10b.

En se référant à la figure 5, on peut voir sur l'enveloppe en préparation que la mèche 15 est déposée en 15a, 15b, 15c, selon des angles différents qui sont obtenus en faisant varier seulement la vitesse de rotation du mandrin creux d'entrainement 12 alors que la présentation de la mèche le long du mandrin s'effectue à vitesse constante.

On peut voir aussi un ruban 14 de mèches de fibres unidirectionnelles, en carbone par exemple, qui a été posé après un arrêt de l'opération d'enroulement, et qui est pincé sur le boyau 11 de cellophane entre la mèche 13 et la mèche 15 bobinée après arrêt.

La bande 14 de fibres unidirectionnelles se trouve ainsi maintenue en position le long du complexe et, après polymérisation, conférera des caractéristiques mécaniques particulières.

La figure 6 illustre une variante préférée de réalisation qui rassemble les plus nombreux avantages du procédé selon l'invention. Ainsi, après avoir habillé le mandrin creux 16, perforé de trous a, destinés à servir pour le déshabillage de l'enveloppe composite, d'un boyau 17 souple et résistant par exemple en cellophane ou en polypropilène, on enroule autour du mandrin 16 habillé deux mèches juxtaposées 18,19 ont l'une est en carbone, par exemple et l'autre en verre teinté.

Les mèches de fibres 18,19 sont enroulées, au cours de quatre passages aller et retour, sur une partie centrale du complexe.

La vitesse de rotation du mandrin 16 a varié de telle façon que les angles de dépose des mèches 18,19 par rapport à l'axe du mandrin 16 sont différents ainsi qu'on l'a expliqué à la figure 4.

On observe que les mèches 18 et 19 enroulées respectivement en début et en fin de parcours, perpendiculairement à l'axe du mandrin, viennent comprimer fortement l'enveloppe 17 sur le mandrin 16. Le déshabillage de l'enveloppe composite avant son introduction dans le moule pour la polymérisation, lorsque l'opération d'enroulement est achevée, sera facilitée par l'introduction d'air sous pression dans le mandrin creux 16, qui viendra décoller celle-ci aux niveaux des trous a.

Venant se superposer à l'enroulement des mèches 18,19 une mèche 20 est enroulée tout le long de la gaine pour parachever l'enveloppe composite. On observe ici clairement que les caractéristiques mécaniques aux extrémités de l'enveloppe seront différentes de celles du centre de cette dernière.

Cette disposition des mèches superposées en certains endroits de l'enveloppe, et de plus selon des angles différents, est particulièrement intéressante, par exemple dans la fabrication d'une raquette de tennis pour faire varier la résistance selon les zones car tous les points du tamis de la raquette ne sont pas sollicités par des efforts comparables.

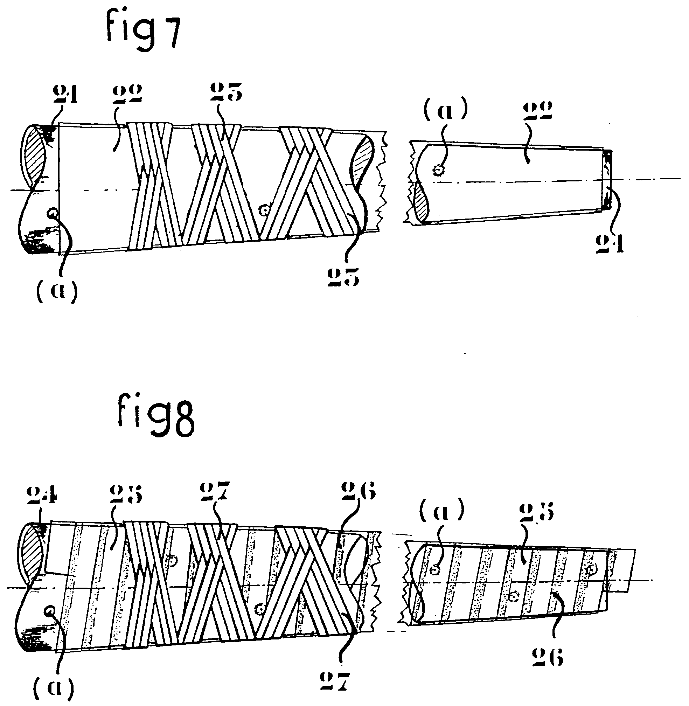

La figure 7 montre un mandrin conique 21 sur lequel on a enfilé une gaine 22 d'une matière souple thermorétractable qui, ayant été chauffée à sa température de rétraction par passage d'un courant d'air chaud, a adopté la forme du mandrin conique 21. Des mèches de fibres 23 imprégnées de résine synthétique durcissable sont alors enroulées autour de la gaine 22. On peut avantageusement utiliser une gaine en polyoléfine réticulée de la famille des polyéthylènes dont le rapport de rétreint est couramment de 2 à 1 lorsque portée à 90°C, mais qui à partir de 130°C jusqu'à 250°C retrouve son élasticité, nécessaire lors du gonflage et de la polymérisation des résines d'enduction enrobant les mèches 23 de fibres. Au cas où des fibres céramiques seraient utilisées enrobées dans des résines polymérisant à de hautes températures, on pourrait utiliser des gaines en polytétrafluoréthylène dont la température de rétreint atteint 327°C pour retrouver leur élasticité à des températures sensiblement supérieures (520°c).

Pour faciliter le déshabillage de l'enveloppe composite du mandrin creux 21, on pourra encore avantageusement introduire de l'air sous pression qui viendra décoller l'enveloppe en ressortant par les trous a.

La figure 8 montre un mandrin conique 24 sur lequel sont réalisés les enroulements en spires hélicoïdales 25, se recouvrant pour partie en 26, d'un matériau plastique souple et élastique, puis des mèches de fibres 27 imprégnées de résine synthétique durcissable. Désirant obtenir un boyau souple gonflable, étanche à l'air, mais également résistant à des températures supérieures à 100°C à partir desquelles durcissent les résines d'enduction des mèches de fibres, on utilise avantageusement un ruban de polypropylène d'une épaisseur de 50 microns, de qualité cast-film dont l'élasticité est bonne et dont les zones de recouvrement 26 des spires 25 sur le mandrin en rotation 24 sont soudées, par exemple, par le passage de molettes chauffantes portées à la température de 180° C assurant également une pression de 4kg/cm², pendant une durée de 1,5 à 2 secondes.

Le boyau conique ainsi obtenu pourra être revêtu de fibres résistantes enduites de résines, par exemple, époxydes ou polyesters, dont les températures de polymérisation pourront s'élever jusqu'à 170°C.

Si par contre, des résines polymérisant à de plus basses températures sont utilisées on pourra, pour réaliser le boyau conique, enrouler un ruban de polyacide neutralisé par des sels métalliques qui a pour caractéristique d'être extensible et de se souder très rapidement puisque son point de fusion s'établit à 95°C.

On peut également coller les zones de recouvrement 26 des spires 25 en les balayant, avant recouvrement, avec une molette ou un pinceau enducteur chargé d'un adhésif approprié.

Il est clair aussi que la solidarisation des zones de recouvrement 26 des spires 25 du ruban en matériau plastique peut s'effectuer par la seule pression de l'air ou d'une mousse de gonflage.

Pour faciliter le déshabillage de l'enveloppe composite du mandrin creux 24, on peut aussi avantageusement introduire de l'air sous pression qui vient décoller l'enveloppe en ressortant par les trous a.

La figure 9 est comparable à la figure 6, mais au lieu de séparer le mandrin 16 de son enveloppe, on tranche celle-ci selon l'axe CD, une génératrice du mandrin cylindrique, pour obtenir une nappe.

Les fibres 19a et 19b sont de couleurs différentes. Les fibres 20 du deuxième enroulement sont différentes des fibres 19a et 19b.

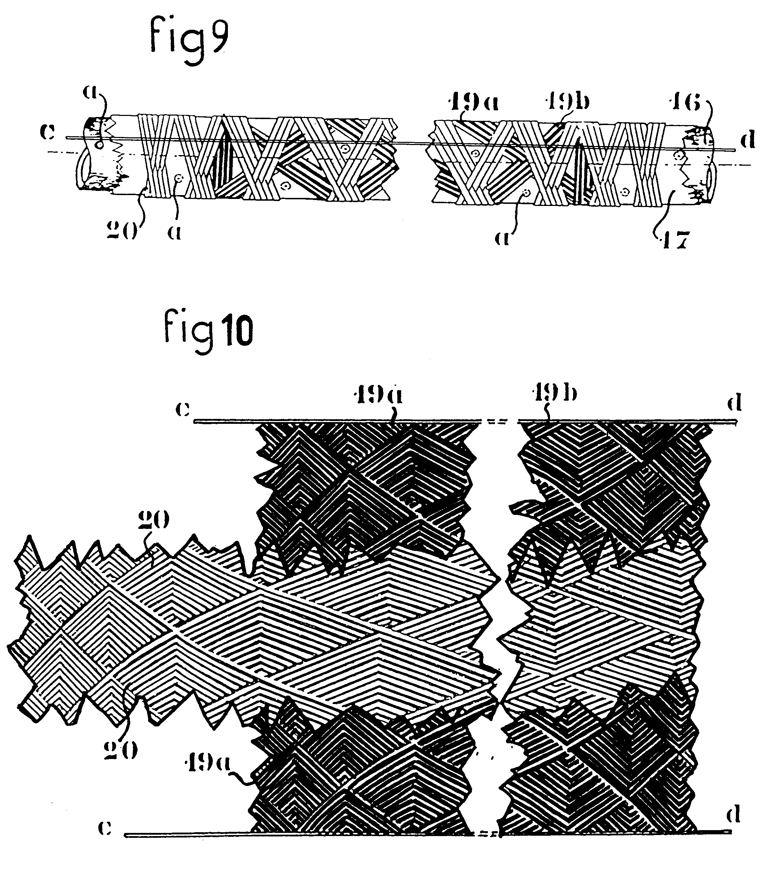

La figure 10 présente une partie en écorché de la nappe mise à plat. Il est clair que les caractéristiques mécaniques, en différents points de la nappe, sont différentes puisque le nombre, la nature et l'angle de dépose des mèches 19a, 19b et 20 varient. De même, si le mandrin 16 avait été conique, les caractéristiques de la nappe obtenue auraient été encore différentes, toutes choses concernant les mèches de fibres étant les mêmes par ailleurs.

Si la forme du mandrin avait été oblongue, les caractéristiques de la nappe eussent été également différentes.

**Revendications**

1. Procédé pour la réalisation, en vue d'une opération de moulage, d'un élément souple tubulaire imprégné de résine selon lequel on enroule des mèches de fibres résistantes (10a, 10b, 13, 14, 15, 18, 19, 20, 23, 27), préalablement imprégnées de résine, autour d'une enveloppe souple (11, 17, 22, 25) disposée sur un mandrin rigide (12, 16, 21, 24) entraîné en rotation, puis on sépare du mandrin (12, 16, 21, 24) l'élément souple tubulaire ainsi obtenu, caractérisé en ce que, lors de l'enroulement des mèches de fibres résistantes, (10a, 10b, 13, 14, 15, 18, 19, 20, 23, 27), on bobine au moins un enroulement supplémentaire desdites mèches sur une longueur différente et selon un pas variable en permettant ainsi de contrôler l'anisotropie du produit obtenu par moulage dudit élément souple.

2. Procédé selon la revendication 1 caractérisé en ce que, préalablement au moulage, on tranche l'élément souple tubulaire pour le mettre à plat et obtenir une nappe tissée imprégnée de résine.

3. Procédé selon la revendication 1 caractérisé en ce que, préalablement au bobinage des mèches, (10a, 10b, 13, 14, 15, 18, 19, 20, 23, 27), celles-ci sont enduites de résines teintées de couleur différente conférant à l'élément tubulaire ou à la nappe obtenus un aspect tissé polychrome.

4. Procédé selon la revendication 1 ou la revendication 2 caractérisé en ce qu'on réalise ladite enveloppe souple par enroulement, autour du mandrin rigide (24) entraîné en rotation, d'un ruban en matériau plastique dont les zones de recouvrement (26) des spires (25) sont solidarisées entre elles.

5. Procédé selon la revendication 1 ou la revendication 2 caractérisé en ce qu'on réalise la dite enveloppe souple en introduisant, sur le mandrin rigide (24) entraîné en rotation, une gaine (22) faite d'un produit souple thermorétractable et en ce qu'on chauffe la dite gaine (22) pour qu'elle vienne, en se rétractant, adopter la forme du mandrin rigide (21).

6. Procédé selon l'une quelconque des revendications 1 à 4 caractérisé en ce qu'une bande (14) de fibres jointives orientées selon la génératrice de l'enveloppe (11) est pincée entre celle-ci et les enroulements des mèches imprégnées (15), en constituant un renfort ponctuel de l'élément souple tubulaire.

7. Procédé selon l'une quelconque des revendications 1 à 4, caractérisé en ce qu'un premier enroulement de mèches de fibres est pratiqué sur une partie seulement de l'enveloppe souple, en constituant en cette partie un renfort de l'élément souple tubulaire.

8. Procédé selon la revendication 7 caractérisé en ce qu'un deuxième enroulement de mèches de fibres est superposé au premier enroulement sur une partie seulement de l'enveloppe souple en constituant en cette partie un renfort de l'élément souple tubulaire.

9. Procédé selon l'une quelconque des revendications 1 à 7 caractérisé en ce que les mèches de fibres formant les enroulements supplémentaires sont de nature différente desdites mèches de fibres résistantes imprégnées de résine, en conférant à l'élément souple obtenu des caractéristiques mécaniques particulières.

10. Elément tubulaire souple, caractérisé en ce qu'il est obtenu par la mise en oeuvre du procédé selon l'une quelconque des revendications 1 et 3 à 8.

fig 1

fig 2

fig 3

fig 4

fig 5

fig 6

fig 7

fig 8

fig 9

fig 10